(19) **Europäisches Patentamt / European Patent Office / Office européen des brevets**

(11) **EP 4 590 043 A1**

(12) **EUROPEAN PATENT APPLICATION**
published in accordance with Art. 153(4) EPC

(43) Date of publication:
   **23.07.2025  Bulletin 2025/30**

(21) Application number: **23869600.9**

(22) Date of filing: **28.04.2023**

(51) International Patent Classification (IPC):
   **H04W 72/04** (2023.01)

(52) Cooperative Patent Classification (CPC):
   **H04W 72/04; H04W 72/0453; H04W 72/53**

(86) International application number:
   **PCT/CN2023/091701**

(87) International publication number:
   **WO 2024/066345 (04.04.2024 Gazette 2024/14)**

(84) Designated Contracting States:
   **AL AT BE BG CH CY CZ DE DK EE ES FI FR GB GR HR HU IE IS IT LI LT LU LV MC ME MK MT NL NO PL PT RO RS SE SI SK SM TR**
   Designated Extension States:
   **BA**
   Designated Validation States:
   **KH MA MD TN**

(30) Priority:  **26.09.2022  CN 202211175347**

(71) Applicant: **ZTE CORPORATION**
   **Shenzhen, Guangdong 518057 (CN)**

(72) Inventors:
   • **YANG, Bojing**
     **Shenzhen, Guangdong 518057 (CN)**
   • **WU, Jun**
     **Shenzhen, Guangdong 518057 (CN)**
   • **LI, Gang**
     **Shenzhen, Guangdong 518057 (CN)**
   • **WANG, Bin**
     **Shenzhen, Guangdong 518057 (CN)**
   • **WANG, Xuxu**
     **Shenzhen, Guangdong 518057 (CN)**

(74) Representative: **Ziebig Hengelhaupt Intellectual Property Attorneys**
   **Patentanwaltskanzlei PartGmbB**
   **Leipziger Straße 49**
   **10117 Berlin (DE)**

(54) **SPECTRUM RESOURCE ALLOCATION METHOD IN CCFD SYSTEM, AND NETWORK DEVICE**

(57)    Embodiments of the present application disclose a spectrum resource allocation method in a CCFD system and a network device, which can realize optimal allocation of spectrum resources and effectively improve the spectrum efficiency and the user perception of the system. The spectrum resource allocation method in the CCFD system is applied to the network device, and comprises: extracting, according to a current spectrum resource allocated to each user in a serving cell, feature data of at least two network indicators related to the spectrum resource; determining optimization targets corresponding to the network indicators according to the feature data of each network indicator, and adjusting the frequency spectrum resource allocated to each user in the serving cell on the basis of the optimization targets; and if the at least two network indicators meet the corresponding optimization targets after the adjustment and the at least two network indicators meet a multi-indicator gradient descent condition, obtaining a target spectrum resource to be allocated to each user in the serving cell.

FIG. 2

**Description**

CROSS-REFERENCE TO RELATED APPLICATIONS

The present disclosure claims priority to Chinese patent application No. 202211175347.0 field on September 26, 2022 to the China Patent Office, and entitled "SPECTRUM RESOURCE ALLOCATION METHOD IN CCFD SYSTEM, AND NETWORK DEVICE", the entire content of which is incorporated herein by reference.

TECHNICAL FIELD

The present application relates to the field of communications, in particular to a spectrum resource allocation method in a CCFD system, and a network device.

BACKGROUND

To relieve the problem of increasingly scarce wireless spectrum resources due to the exponential growth of wireless devices, the field of communications typically employs a Co-time Co-frequency Full Duplex (CCFD) technology to enhance the spectrum efficiency of wireless communication links. The CCFD refers to that the wireless devices use the same time and the same frequency to simultaneously transmit and receive wireless signals. A 5th Generation Mobile Communication Technology (5G) system has incorporated flexible duplex technologies including dynamic Time Division Duplex (TDD) and flexible Frequency Division Duplex (FDD) as key functions. Compared with traditional Half Duplex (HD) modes, such as an FDD mode and a TDD mode, the CCFD mode can nearly double the spectrum efficiency.

The 5G system defines multiple frame structure combination modes, but the frame structure modes are fixed and do not support dynamic allocation and switching. Therefore, the uplink and downlink spectrum efficiency is largely rigid in application scenarios and has limited room for improvement. The CCFD technology no longer requires consistent spectrum resource allocation modes among stations within a region, intelligent allocation and dynamic switching can be performed according to actual service demands, and meanwhile, simultaneous uplink and downlink transmission can be achieved in the time domain and resources are allocated flexibly according to service characteristics. Therefore, new challenges have emerged in adjusting the allocation of spectrum resources within the CCFD system.

SUMMARY

An objective of embodiments of the present application is to provide a spectrum resource allocation method in a CCFD system, and a network device.

In order to achieve the above objective, the embodiments of the present application adopt the following technical solutions:

In a first aspect, a spectrum resource allocation method in a CCFD system is provided, applied to a network device, and includes:

extracting, according to current spectrum resources allocated to each user in a serving cell, feature data of at least two network indicators related to the spectrum resources;
determining, according to the feature data of each of the network indicators, optimization targets corresponding to the network indicators, and adjusting, based on the optimization targets, the spectrum resources allocated to each user in the serving cell; and
obtaining, in a case that after adjustment, the at least two network indicators satisfy the corresponding optimization targets and satisfy a multi-indicator gradient descent condition, target spectrum resources allocated to each user in the serving cell.

In a second aspect, a network device is provided, and includes:

an extracting module, configured to extract, according to current spectrum resources allocated to each user in a serving cell, feature data of at least two network indicators related to the spectrum resources;
an adjusting module, configured to determine, according to the feature data of each of the network indicators, optimization targets corresponding to the network indicators, and adjust, based on the optimization targets, the spectrum resources allocated to each user in the serving cell; and
a determining module, configured to obtain, in a case that after adjustment, the at least two network indicators satisfy the corresponding optimization targets and satisfy a multi-indicator gradient descent condition, target spectrum resources allocated to each user in the serving cell.

In a third aspect, a network device is provided, and includes a processor, a memory, and a program or instruction that is stored on the memory and capable of running on the processor, **where the** program or the instruction, when executed by the processor, implements the method according to the first aspect.

BRIEF DESCRIPTION OF DRAWING(S)

The accompanying drawings are included here to provide a further understanding of the present application and constitute a part of the present application. The exemplary embodiments of the present application and the description thereof are used for explaining the present application and do not constitute an undue limitation to the present application. In the drawings:

FIG. 1 is a schematic diagram of comparison of frame structures of a traditional 5G system and a CCFD system provided by an embodiment of the present application.
FIG. 2 is a process flow schematic diagram of a spectrum resource allocation method in a CCFD system provided by an embodiment of the present application.
FIG. 3 is a process flow schematic diagram of a spectrum resource allocation method in a 5G CCFD system provided by an embodiment of the present application.
FIG. 4 is a schematic structural diagram of a network device provided by an embodiment of the present application.
FIG. 5 is a schematic diagram of a multi-scenario technical effect in a CCFD system provided by an embodiment of the present application.
FIG. 6 is a schematic structural diagram of a network device provided by an embodiment of the present application.

DETAILED DESCRIPTION

In order to make the objectives, technical solutions and advantages of the present application clearer, the technical solutions of the present application will be clearly and completely described below in conjunction with specific embodiments of the present application and corresponding accompanying drawings. Apparently, the described embodiments are only part of the embodiments of the present application, rather than all the embodiments. Based on the embodiments of the present application, all other embodiments obtained by a person of ordinary skill in the art without making creative work shall fall within the scope of protection of the present application.

The terms "first", "second", and the like in the description and the claims of the present application are used for distinguishing between similar objects and not necessarily for describing a particular sequential or chronological order. It is to be understood that the data so used are interchangeable under appropriate circumstances so that the embodiments of the present application may be implemented in sequences other than those illustrated or described herein. In addition, in the description and claims, the term "and/or" indicates at least one of the connected objects, and the character "/" generally indicates that the associated objects are of an "or" relationship.

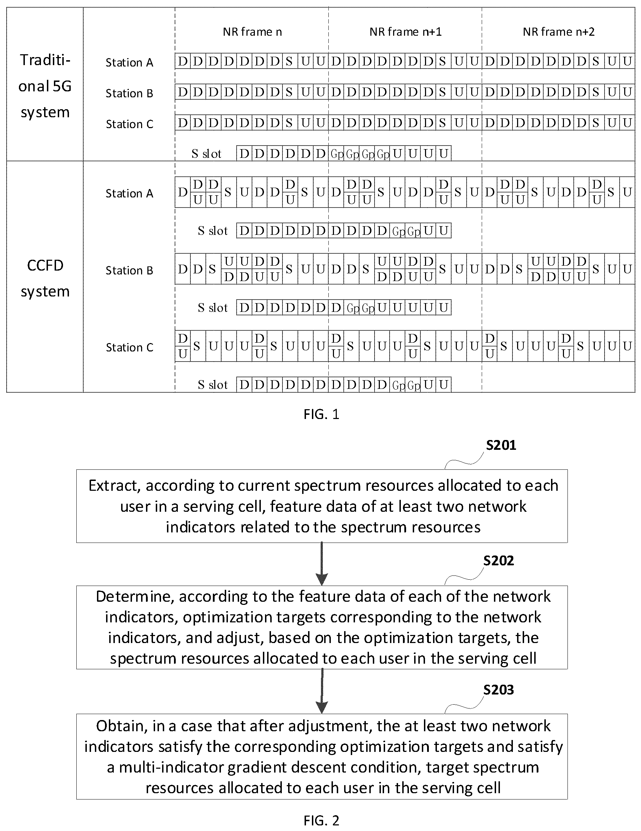

Due to the characteristic that a Co-time Co-frequency Full Duplex (CCFD) system supports time-frequency domain uplink and downlink duplexing, a flexible frame structure has the necessary and sufficient conditions for application deployment. For a schematic diagram of comparison of frame structures of a traditional 5G system and a CCFD system, please refer to FIG. 1. A new radio frame (which may also be referred to as a radio frame) has a duration fixed at 10 s, and consists of 10 subframes. One subframe contains a plurality of slots, and the number of slots is related to the subcarrier spacing. Under normal cyclic prefix conditions, subcarrier spacings of 15 kHz, 30 kHz, 60 kHz, 120 kHz, and 240 kHz correspond to 1, 2, 4, 8, and 16 slots respectively. One slot consistently contains 14 OFDM symbols. The 5G system defines various frame structure combination modes in 38.213 Table 11.1, with the frame structure composed of all-downlink slots D, all-uplink slots U, and special slots S. The ratio of downlink symbols, Guard Period (GP), and uplink symbols in special slots is flexibly adjustable, with the GP capable of occupying 2 to 4 symbol lengths. However, the frame structure combination modes are fixed and do not support dynamic switching and allocation. Therefore, the uplink and downlink spectrum efficiency is largely rigid in application scenarios and has limited room for improvement. The CCFD system no longer requires consistent spectrum resource allocation modes among stations within a region, and intelligent allocation and dynamic switching can be performed based on actual service demands. Meanwhile, simultaneous uplink and downlink transmission can be achieved in the time domain and resources are allocated flexibly according to service characteristics, and the room for improvement of the spectrum efficiency is large. New challenges have emerged in adjusting the allocation of spectrum resources within the CCFD system according to service characteristics, spectrum efficiency, user perception, or other dimensions, and the optimal allocation needs to be achieved in multiple dimensions.

An embodiment of the present application provides a spectrum resource allocation method in a CCFD system, which can realize optimal allocation of spectrum resources and effectively improve the spectrum efficiency and the user perception of the system. The main technical concept of the embodiments of the present application includes: setting at least two network indicators related to spectrum resources, the network indicators being uplink and downlink spectrum efficiency, uplink and downlink user perception, and the like; based on the set network indicators, defining corresponding spectrum efficiency models and user perception models, and extracting model non-convex optimization problems; and by using a non-cooperative game method, achieving a non-cooperative game equilibrium (which may also be referred to as Nash equilibrium) in at least two dimensions such as spectrum efficiency and user perception, thereby ensuring optimal allocation. The non-cooperative game method refers to a type of game in which participants cannot reach a binding agreement.

The technical solutions provided by the embodiments of the present application can be applied to communication systems based on a CCFD technology, collectively referred to as a CCFD system in the embodiment of the present application, such as a 5G CCFD system, or other communication systems based on the CCFD technology or a CCFD evolution technology.

The technical solutions provided by the embodiments of the present application may be executed by a network device in the CCFD system, or hardware installed in the network device. In the embodiments of the present application, the network device is an apparatus deployed in a Radio Access Network (RAN) to provide a wireless communication function for a terminal device. The network device may be a base station. The base station may include various forms of macro base stations, micro base stations, relay stations, access points and so on. In systems using different radio access technologies, the names of devices with base station functions may be different, for example, in a 5G network, it is referred to as a 5G base station (gNB), which is not limited in the embodiment of the present application. Specifically, the technical solutions provided by the embodiments of the present application may be deployed in a base band unit (BBU) or other control units of the network device. For example, the BBU function of the 5G base station (gNB) is restructured into two functional entities: a centralized unit (CU) and a distribute unit (DU). Correspondingly, it may be deployed in the CU or DU of the 5G base station (gNode B, gNB). The technical solutions provided by the embodiments of the present application is suitable for application scenarios involving multiple base stations and multiple cells in the CCFD system, and a centralized or distributed manner may be adopted.

The technical solutions provided by the embodiments of the present application are described in details below in combination with the accompanying drawings.

Referring to FIG. 2, FIG. 2 is a spectrum resource allocation method in a CCFD system provided by an embodiment of the present application, the spectrum resource allocation method in the CCFD system is applied to a network device (may be a base station), and includes the following steps:

S201: according to current spectrum resources allocated to each user in a serving cell, feature data of at least two network indicators related to spectrum resources are extracted.

The serving cell refers to a region covered by a base station. Users in the serving cell are served users accessing the cell. The base station allocates the spectrum resources to each user in the serving cell. In the embodiment of the present application, for ease of distinction, users using uplink spectrum resources are referred to as uplink users, and users using downlink spectrum resources are referred to as downlink users.

It should be understood that the users in the serving cell generally refer to terminal devices, which may include but are not limited to Mobile Stations (MS), Mobile Terminals, Mobile Telephones, User Equipment (UE), handsets, portable equipment, vehicles, and the like. The terminal devices can communicate with one or more core networks via a wireless access network. For instance, the terminal devices may be mobile phones (or referred to as "cellular" phones), computers with wireless communication capabilities, and the like. The terminal devices may also be portable, pocket-sized, handheld, computer-built-in, or vehicle-mounted mobile apparatuses.

In an optional implementation, the network indicators may be uplink and downlink spectrum efficiency, spectrum efficiency or a spectrum efficiency mean square error of each uplink user in the serving cell may be determined as feature data of uplink spectrum efficiency, and spectrum efficiency or a spectrum efficiency mean square error of each downlink user in the serving cell may be determined as feature data of downlink spectrum efficiency. The feature data may be represented in the form of an eigenvalue matrix or other data formats.

Specifically, the spectrum efficiency of the uplink user may be determined based on uplink transmission power of the uplink user in the serving cell, an uplink composite channel matrix allocated to the uplink user by the serving cell, a beamforming factor of the uplink user in the serving cell, an uplink composite channel matrix allocated to the uplink user by neighboring cells, a beamforming factor of the uplink user in the neighboring cells, beamforming factors of other users in the neighboring cells, and transmission power of other users in the neighboring cells.

The spectrum efficiency of the downlink user may be determined based on a downlink composite channel matrix allocated to the downlink user by the serving cell, a beamforming factor of the downlink user in the serving cell, a downlink composite channel matrix allocated to the downlink user by neighboring cells, a beamforming factor of the downlink user in the neighboring cells, and transmission power of other users in the neighboring cells.

In an optional implementation, the network indicators may further be uplink and downlink user perception, an actual transmission rate of each uplink user in the serving cell may be determined as feature data of uplink user perception, and an actual transmission rate of each downlink user in the serving cell may be determined as feature data of downlink user perception.

Specifically, the actual transmission rate of the uplink user may be determined according to spectrum resources available to the uplink user and a signal to interference plus noise ratio (SINR) on a spectrum of the serving cell; and the actual transmission rate of the downlink user may be determined according to spectrum resources available to the downlink user and the SINR on the spectrum of the serving cell.

S202: optimization targets corresponding to the network indicators are determined according to the feature data of each of the network indicators, and the spectrum resources allocated to each user in the serving cell are adjusted based on the optimization targets.

During specific implementation, the optimization targets corresponding to the network indicators may include optimization ranges corresponding to the network indicators.

In an optional implementation, an optimization target corresponding to the uplink and downlink spectrum efficiency may be referred to as a first optimization target. The first optimization target may include the following content: a first optimization range corresponding to the uplink and downlink spectrum efficiency, where the first optimization range may be determined based on a first function used for representing the uplink spectrum efficiency and a second function used for representing the downlink spectrum efficiency, and it requires that the first function and the second function have an intersection in the same monotonic direction.

The uplink spectrum efficiency is a sum of spectrum efficiency or spectrum efficiency mean square errors of all uplink users in the serving cell, and the downlink spectrum efficiency is a sum of spectrum efficiency or spectrum efficiency mean square errors of all downlink users in the serving cell. Correspondingly, the first function is a summation function for the spectrum efficiency or the spectrum efficiency mean square errors of all the uplink users in the serving cell; and the second function is a summation function for the spectrum efficiency or the spectrum efficiency mean square errors of all the downlink users in the serving cell.

Exemplarily, based on the first function used for representing uplink spectrum efficiency and the second function used for representing downlink spectrum efficiency, derivatives can be taken in the time domain by using a calculus method to obtain the corresponding slopes of the two functions within a sampling period. In the case that the two functions (typically linear functions) have an intersection in the same monotonic direction, an effective change interval can be determined as the first optimization range.

In an optional implementation, an optimization target corresponding to the uplink and downlink user perception may be referred to as a second optimization target. The second optimization target may include the following content: a second optimization range corresponding to the uplink and downlink user perception, where the second optimization range may be determined according to a third function used for representing the uplink user perception and a fourth function used for representing the downlink user perception, and it requires that the third function and the fourth function have an intersection in the same monotonic direction.

The uplink user perception is a sum of actual transmission rates of all uplink users in the serving cell, and the downlink user perception is a sum of actual transmission rates of all downlink users in the serving cell. Correspondingly, the third function is a summation function for the actual transmission rates of all the uplink users in the serving cell; and the fourth function is a summation function for the actual transmission rates of all the downlink users in the serving cell.

Exemplarily, according to the third function used for representing the uplink user perception and the fourth function used for representing the downlink user perception, derivatives can be taken in the time domain by using a calculus method to obtain the corresponding slopes of the two functions within a sampling period. In the case that the two functions (typically linear functions) have an intersection in the same monotonic direction, an effective change interval can be determined as the second optimization range.

During specific implementation, in the process of adjusting the spectrum resources allocated to each user in the serving cell based on the optimization targets, the ratio of the spectrum resources in the serving cell can be adjusted by adjusting the spectrum resources allocated to each user in the serving cell in a direction where the optimization targets (first optimization target, second optimization target) approach. The adjustment of the ratio of the spectrum resources in the serving cell may include adjustment in the frequency domain, and may further include adjustment in both the time domain and the frequency domain. Exemplarily, the ratio of uplink and downlink spectrum resources in the serving cell can be adjusted in the time domain with a scheduling period (TTI) or a larger time granularity as the unit, such as a new radio interface frame as the unit.

S203: in the case that after adjustment, the at least two network indicators satisfy the corresponding optimization targets and satisfy a multi-indicator gradient descent condition, target spectrum resources allocated to each user in the serving cell are obtained.

For any network indicator, the network indicator satisfying the corresponding optimization target after adjustment may refer to that after the spectrum resources in the serving cell are adjusted, the latest network indicator obtained falls within the corresponding optimization range. Specifically, the uplink and downlink spectrum efficiency satisfying the corresponding first optimization target after adjustment may refer to that: the latest uplink spectrum efficiency and the latest downlink spectrum efficiency obtained after adjusting the spectrum resources in the serving cell fall within the corresponding first optimization range. The uplink and downlink user perception satisfying the corresponding second optimization target after adjustment may refer to that: the latest uplink user perception and the latest downlink user perception obtained after adjusting the spectrum resources in the serving cell fall within the corresponding second optimization range.

In an optional implementation, in the case that after adjustment, any one of the network indicators does not satisfy the corresponding optimization target, S201 may be performed again, that is, according to the current spectrum resources allocated to each user in the serving cell, the feature data of the at least two network indicators related to the spectrum resources are extracted.

During specific implementation, the multi-indicator gradient descent condition includes: the gradient descent of each model corresponding to the at least two network indicators monotonically converges or satisfies a Nash equilibrium point. Below, a detailed explanation is provided for each model corresponding to the at least two network indicators.

In the case that the network indicators are the uplink and downlink spectrum efficiency, the corresponding model may be referred to as a spectrum efficiency model. The CCFD system differs from the traditional 5G system in a spectrum resource arrangement mode. Since the allocation of the uplink and downlink spectrum resources of each base station no longer requires strict consistency, this implies that the spectrum efficiency of each base station needs to be converted into a spectrum efficiency set of the users in the serving cell.

The spectrum efficiency of each downlink user i in the serving cell n may be determined by the following formula [1]:

$$T_{n,i}^D = log_2 \left( 1 + \frac{|h_{n,i}^H w_{n,i}|^2}{\sum_{i \in K_{n,d}, m \neq n} |h_{m,i}^H w_{m,i}|^2 + \sum_{m \in N} \sum_{j \in K_{m,d}} Q_{m,j} |h_{m,j}^H|^2 + \delta^2} \right)$$

where, $T_{n,i}^D$ represents the spectrum efficiency of the downlink user i in the serving cell n, $h_{n,i}^H$ represents the downlink composite channel matrix allocated by the serving cell n to the downlink user *i,* and $w_{n,i}$ represents the beamforming factor of the downlink *user i in* the serving cell *n;* $h_{m,i}^H$ represents the downlink composite channel matrix allocated by the neighboring cell m to the downlink user *i,* $w_{m,i}$ represents the beamforming factor of the downlink user *i* in the neighboring cell m, $Q_{m,j}$ represents the transmission power of the jth user in an mth cell of the row chain, and $\delta^2$ represents additive white Gaussian noise.

The spectrum efficiency of the uplink user i in the serving cell n may be determined by the following formula [2]:

$$T_{n,i}^U = log_2 \left( 1 + \frac{q_{n,i} |v_{n,i}^H \varphi_{n,i}|^2}{\sum_{i \in K_{n,u}, m \neq n} Q_{m,j} |v_{m,i}^H \varphi_{m,i}|^2 + \sum_{m \in N} \sum_{j \in K_{m,u}} Q_{m,j*} |\varphi_{m,j}|^2 + \delta^2 |v_n^H|^2} \right)$$

where, $T_{n,i}^U$ represents the spectrum efficiency of the uplink user i in the serving cell n, $q_{n,i}$ represents the uplink transmission power of the uplink user *i* in the serving cell *n,* $v_{n,i}^H$ represents the uplink composite channel matrix allocated by the serving cell n to the uplink user *i,* and $\varphi_{n,i}$ represents the beamforming factor of the uplink user *i* in the serving cell *n;* and $v_{m,i}^H$ represents the uplink composite channel matrix allocated by the neighboring cell m to the uplink user *i,* $\varphi_{m,i}$ represents the beamforming factor of the uplink user *i* in the neighboring cell *m,* $\varphi_{m,j}$ represents the beamforming factor of other user *j* in the neighboring cell m, $Q_{m,j}$ represents the transmission power of the jth user in an mth cell of the row chain, and $\delta^2$ represents additive white Gaussian noise.

Taking into account time-domain sampling statistics and punishment for large-scale errors, the uplink and downlink spectrum efficiency is normalized through mean square error (MSE), and the downlink spectrum efficiency and the uplink spectrum efficiency are determined by the following formulas [3] and [4] respectively:

$$g_D(i) = \sum_{i=1}^{K_d} T_{n,i}^D$$

$$g_U(j) = \sum_{j=1}^{K_u} T_{n,j}^U$$

where, $g_D(i)$ represents the downlink spectrum efficiency, $g_U(j)$ represents the uplink spectrum efficiency, $T_{n,i}^D$ represents the spectrum efficiency mean square error of the downlink user $i$, $T_{n,j}^U$ represents the spectrum efficiency mean square error of the uplink user $j$, $K_d$ represents the number of downlink users, $K_U$ represents the number of uplink users, and i and j are the $i^{th}$ downlink user and the $j^{th}$ uplink user respectively.

The total system resources in the serving cell n may be determined by the following formula [5]:

$$R_{n,total} = \sum_{i=1}^{K_d} T_{n,i}^D + \sum_{j=1}^{K_u} T_{n,j}^U$$

where, $R_{n,total}$ represents the total system resources in the serving cell $n$. It can be seen that the allocation of the uplink and downlink spectrum resources in the CCFD system are two opposite adjustment directions. Therefore, the uplink and downlink spectrum efficiency problem in the serving cell can be normalized to a discrete non-convex optimization problem (problem P0). The continuous expressions of the uplink and downlink spectrum efficiency in the real network and time domain of the serving cell are expressed by the following formulas [6] and [7]:

$$\vartheta_D(i,t) \overset{\text{def}}{=} \int_{i=1}^{K} \int_{t_{n-1}}^{t_{n+1}} g_D(i)\, dt$$

$$\vartheta_U(j,t) \overset{\text{def}}{=} \int_{j=1}^{K} \int_{t_{n-1}}^{t_{n+1}} g_u(j)\, dt$$

where, $\vartheta_D(i, t)$ (formula [6]) is the second function used for representing the downlink spectrum efficiency, $\vartheta_U(j, t)$ (Formula [7]) is the first function used for representing the uplink spectrum efficiency, $t_{n+1}$ and $t_{n-1}$ represent the mean eigenvalues within two sampling periods in the time domain. A linear fitting method is adopted here, and a matrix inner product method may also be adopted.

An optimization target corresponding to the spectrum efficiency model, in order to facilitate distinction, may be referred to as the first optimization target, specifically: the first optimization range corresponding to the uplink and downlink spectrum efficiency is determined based on the first function used for representing the uplink spectrum efficiency and the second function used for representing the downlink spectrum efficiency, and the first function and the second function have an intersection in the same monotonic direction. It can be understood that since the spectrum efficiency model is used to solve the uplink and downlink spectrum efficiency problem in the cell, the optimization target corresponding to the spectrum efficiency model is also the optimization target corresponding to the uplink and downlink spectrum efficiency (network indicator).

Exemplarily, based on the first function and the second function, derivatives can be taken in the time domain by using a calculus method to obtain the corresponding slopes of the two functions within a sampling period. In the case that the two functions have an intersection in the same monotonic direction, an effective change interval can be determined as the first optimization range.

In the case that the network indicators are the uplink and downlink user perception, the corresponding model may be referred to as a user perception model. Feature data of the user perception may be represented via the actual transmission rate of a user in the serving cell.

The actual transmission rate of each user in the serving cell n may be determined by the following formula [8]:

$$R_{n,i} = B_{n,i} \log_2(1 + X_n)$$

where, $R_{n,i}$ represents the actual transmission rate of the user i in the serving cell n, $B_{n,i}$ represents the spectrum resources available to the user i in the serving cell n, and $X_n$ represents the SINR on the spectrum of the serving cell n.

Specifically, the SINR on the spectrum of the serving cell n may be determined by the following formula [9]:

$$X_n = \frac{p_n h_{n,n}}{\sum_{i \neq n} p_i h_{i,n} + p^m h^{ms} + \omega_{i,n}}$$

where, $X_n$ represents the SINR on the spectrum of the serving cell n, $p_n$ represents the transmission power of users in the serving cell n, $p^m$ represents the transmission power of users in the neighboring cell, $h_{n,n}$ represents the channel gain between the serving cell and users, $h^{ms}$ represents the channel gain between the neighboring cell and the serving cell n, and $\omega_{i,n}$ represents additive white Gaussian noise.

Considering that the actual transmission rate is limited by transmission quality fluctuations, the spectrum resources available to each user in the serving cell n may be determined by the following formula [10], taking 100M bandwidth as an example:

$$B_{n,i} = M_{max} * Mcs_{n,i} * B_D * Flow_{n,i}$$

where, $B_{n,i}$ represents the spectrum resources available to the user i in the serving cell n, $M_{max}$ represents the maximum time-frequency domain resources of the serving cell, $Mcs_{n,i}$ represents the modulation mode of the user i in the serving cell n, $B_D$ represents the resource ratio of the serving cell, and $Flow_{n,i}$ represents the number of transmission layers of the user i in the serving cell n.

It should be noted that formulas [8], [9], and [10] are applicable to both uplink and downlink users. The user i may be an uplink user in the serving cell n, or a downlink user in the serving cell n.

Therefore, the continuous expression of the downlink user perception in the real network and time domain in the serving cell is expressed by the following formula [11]:

$$\tau(D, i, t) \stackrel{\text{def}}{=} \int_{t_{n-1}}^{t_{n+1}} \left( \sum_{i=1}^{K_d} R_{n,i} \right) dt$$

Similarly, the continuous expression of the uplink user perception in the real network and time domain in the serving cell is expressed by the following formula [12]:

$$\varepsilon(U, j, t) \stackrel{\text{def}}{=} \int_{t_{n-1}}^{t_{n+1}} \left( \sum_{j=1}^{K_u} R_{n,j} \right) dt$$

It should be noted that methods for calculating the uplink user perception and the downlink user perception are the same, but only user sets are different. A user set corresponding to the uplink user perception includes uplink users, and a user set corresponding to the downlink user perception includes downlink users. $\tau(D, i, t)$ (formula [11]) is the fourth function used for representing the downlink user perception, $\varepsilon(U, j, t)$ (Formula [12]) is the third function used for representing the uplink user perception, $t_{n+1}$ and $t_{n-1}$ represent the mean eigenvalues within two sampling periods in the time domain. A linear fitting method is adopted here, and a matrix inner product method may also be adopted.

Cross Link Interference (CLI) and Self Interference Cancellation (SIC) exist among cells of the CCFD system. SIC refers to counteract the interference generated by fixed network nodes when transmitting and receiving signals at the same frequency. Therefore, interference constraint Q is introduced to suppress link interference overload. The user perception model (problem P1) is expressed by the following formula [13]:

$$\max_{p} R_{sum}(p) = \sum_{n=1}^{N} R_n(p)$$

$$s.t.\ 0 < p_n < p_n^{max}, \forall\ 1 \leq n \leq N$$

$$\sum_{i=1}^{N} p_i h^{sm} \leq Q$$

It can be seen that problem P1 has non-convex characteristics. An optimization target corresponding to the user perception model may be extracted, and in order to facilitate distinction, it may be referred to as the second optimization target, specifically: the second optimization range corresponding to the uplink and downlink user perception is determined according to the third function used for representing the uplink user perception and the fourth function used for representing the downlink user perception, and the third function and the fourth function have an intersection in the same monotonic direction. It can be understood that since the user perception model is used to solve the uplink and downlink user perception problem in the cell, the optimization target corresponding to the user perception model is the optimization target corresponding to the uplink and downlink user perception (network indicator).

Exemplarily, according to the third function and the fourth function, derivatives can be taken in the time domain by using a calculus method to obtain the corresponding slopes of the two functions within a sampling period. In the case that the two functions have an intersection in the same monotonic direction, an effective change interval can be determined as the second optimization range.

It can be understood that in the embodiments of the present application, only the above two network indicators of uplink and downlink spectrum efficiency and uplink and downlink user perception are described. During specific implementation, other similar network indicators related to the spectrum resources may also be used. The number of network indicators used in the technical solutions is not limited to two, and the details will not be repeated.

Exemplarily, aiming at the spectrum efficiency model and the user perception model corresponding to the two network indicators respectively, a multi-indicator gradient descent method can be used to judge whether the two network indicators satisfy the multi-indicator gradient descent condition. After sampling in the time domain, the multi-indicator gradient descent method takes the derivatives for the two problem functions within the continuous sampling period. In the case that the gradient can converge to 0, it is confirmed that the algorithm operation result is optimal; otherwise, it needs to be re-iterated. The Nash equilibrium, also known as a non-cooperative game equilibrium, is an important term in game theory, that is, a unilateral change of strategy by either party under this strategy combination (while the other party's strategy remains the same) will not increase its return. In the embodiments of the present application, the Nash equilibrium specifically refers to the non-cooperative game equilibrium obtained in two dimensions of spectrum efficiency and user perception.

In an optional implementation, key indicators such as the SINR, a modulation and coding scheme (MCS), and the like of served users of each cell are measured within the scheduling period, and are fed back to the corresponding serving cell in an initial spectrum resource arrangement state. The initial spectrum resources are allocated to each user within the scheduling period according to the service characteristics. On this basis, the spectrum resource allocation method provided in the embodiment of the present application is adopted to realize the optimal allocation of the spectrum resources. The initial spectrum resource arrangement state refers to the spectrum resource arrangement state with a fixed ratio of the uplink and downlink spectrum resources. For example, in the 5G system, the ratio of the uplink and downlink spectrum resources may be fixed at 74.28%. That is to say, before performing S201, the method further includes:

S200: initial spectrum resources are allocated to each user in the serving cell based on the SINR, the MCS, and service characteristics of each user in the serving cell within a scheduling period TTI.

Types of the service characteristics may include: uplink and downlink services, unidirectional high-capacity services, low-latency services, high-speed mobile services, and the like.

In an optional implementation, in the case that the at least two network indicators do not satisfy the multi-indicator gradient descent condition, S200 may be performed again, that is, the initial spectrum resources are allocated to each user in the serving cell based on the SINR, the MCS, and the service features of each user in the serving cell within the scheduling period TTI.

The spectrum resource allocation method in the CCFD system provided by the embodiments of the present application is applied to the network device, the feature data of the at least two network indicators related to the spectrum resources can be extracted according to the current spectrum resource allocation condition of each user in the serving cell; the optimization targets corresponding to the network indicators are extracted according to the above feature data, and the ratio of the spectrum resources in the serving cell is adjusted based on the optimization target; and in the case that after the adjustment, the at least two network indicators satisfy the corresponding optimization targets and the at least two network indicators satisfy the multi-indicator gradient descent condition, the target spectrum resources allocated to each user in the serving cell can be obtained. Since the network indicators are related to the spectrum resources, the spectrum resources in the serving cell can be adjusted by the optimization targets corresponding to the at least two network indicators. The optimal allocation of the spectrum resources can be achieved by preferred orientation of the multi-indicator gradient descent method and the function thereof in the system, so as to effectively improve the spectrum efficiency and user perception of the system.

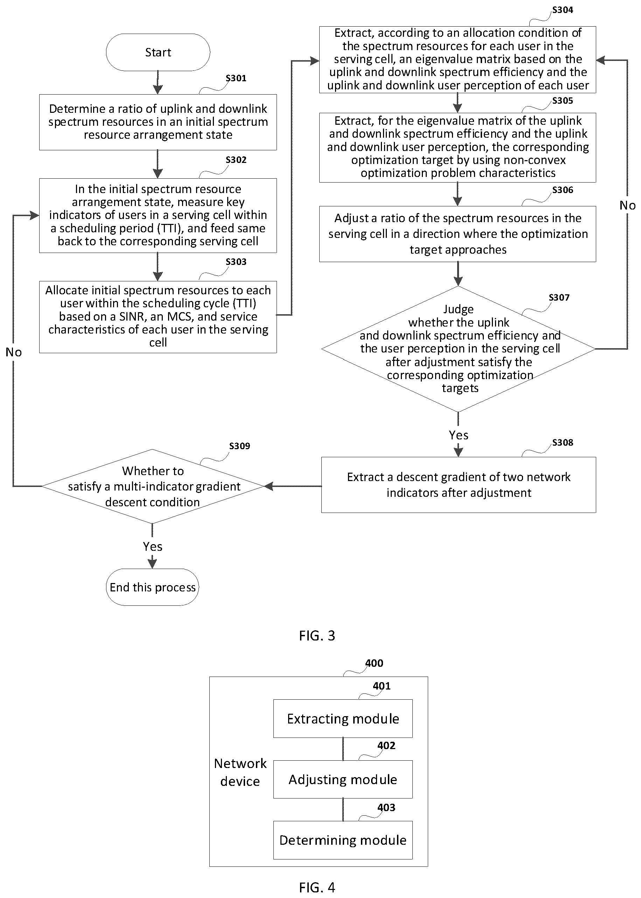

The following takes the 5G CCFD system as an example to describe in detail a spectrum resource allocation method provided by the embodiment of the present application. The method may be applied to gNB. Assuming that two network indicators of uplink and downlink spectrum efficiency and uplink and downlink user perception are adopted, as shown in FIG. 3, the method includes the following steps:

S301: initial spectrum resource arrangement is performed for a serving cell in the 5G CCFD system, and a ratio of uplink and downlink spectrum resources in the initial spectrum resource arrangement state is determined.

In the 5G CCFD system, the ratio of the uplink and downlink spectrum resources in the initial spectrum resource arrangement state is generally a fixed value, for example, 74.28%. It should be noted that S301 is a system initialization process and is not a necessary step in the spectrum resource allocation method provided by the embodiment of the present application.

S302: in the initial spectrum resource arrangement state, key indicators of users in the serving cell are measured within the scheduling period (TTI), where the key indicators may include SINR, MCS, and the like, and are fed back to the corresponding serving cell.

S303: initial spectrum resources are allocated to each user within the scheduling period (TTI) based on the SINR, the MCS, and service characteristics of each user in the serving cell.

In order to facilitate distinction, in the embodiments of the present application, the spectrum resources allocated to the users within the scheduling period based on the SINR, the MCS, and the service characteristics in the initial spectrum resource arrangement state are called the initial spectrum resources. Types of the service characteristics may include: uplink and downlink services, unidirectional high-capacity services, low-latency services, high-speed mobile services, and the like.

S304: according to the allocation condition of the spectrum resources for each user in the serving cell, an eigenvalue matrix based on the uplink and downlink spectrum efficiency and the uplink and downlink user perception of each user is extracted.

It can be understood that the allocation condition of the spectrum resources for each user in the serving cell is the current spectrum resources allocated to each user in the serving cell. Considering the effectiveness and memorability of the network, normalization processing may be performed after multi-point sampling in the time domain, so as to fit and obtain the eigenvalue matrix, which can improve the targeting ability and accuracy compared with an extraction method of the traditional 5G system.

S305: for the eigenvalue matrix of the uplink and downlink spectrum efficiency and the uplink and downlink user perception, the corresponding optimization target is extracted by using non-convex optimization problem characteristics.

It should be noted that, considering the effectiveness of the network, the corresponding optimization target needs to be extracted again when iterating this step again. The non-convex optimization problem is a method that directly optimizes a non-convex formula without using relaxation treatment.

S306: a ratio of spectrum resources in the serving cell is adjusted in a direction where the optimization target approaches.

It can be understood that the ratio adjustment of the spectrum resources in the serving cell is to adjust the spectrum resources allocated to each user in the serving cell. Since the CCFD system can support the Co-time Co-frequency transmission, it does not need to consider the interference factors in the neighboring cells, and the uplink and downlink spectrum resources can be flexibly adjusted according to the service demands in the serving cell.

S307: whether the uplink and downlink spectrum efficiency and the uplink and downlink user perception in the serving cell after adjustment satisfy the corresponding optimization targets is judged, if not, S304 is performed again, and if yes, S308 continues to be performed.

S308: a descent gradient of two network indicators after adjustment is extracted.

S309: whether the two network indicators satisfy the multi-indicator gradient descent condition is judged, that is, whether the multi-indicator gradient descent converges monotonically or satisfies a Nash equilibrium point is judged. If yes, it is considered that the optimal allocation has been achieved, in order to facilitate distinction, the spectrum resources allocated to each user in the serving cell at this moment are called target spectrum resources, and the spectrum resource allocation process is finished. If not, S302 is performed again.

It should be noted that since the users in the serving cell change in real time, the spectrum resource allocation method provided by the embodiment of the present application is only one spectrum resource allocation process. During specific implementation, the above spectrum resource allocation process needs to be repeatedly performed. After the completion of the spectrum resource allocation process of S309, S304 or S302 are performed to continue the next spectrum resource allocation process.

According to the spectrum resource allocation method in the 5G CCFD system provided by the embodiment of the present application, the key indicators such as the SINR, the MCS, and the like of served users of each cell are measured within the scheduling period in the initial frequency spectrum resource arrangement state, are fed back to the corresponding serving cell, and the spectrum resources within the scheduling period of each user can be allocated according to the service characteristics. According to the allocation condition of the spectrum resources for each user, the feature data based on the uplink and downlink spectrum efficiency and the uplink and downlink user perception of each user are extracted. Considering the effectiveness and memorability of the network, multi-point sampling in the time domain can be performed, so as to improve the targeting ability and accuracy. Aiming at the above feature data, the corresponding optimization target is extracted by using the non-convex optimization problem characteristics, and the ratio of the spectrum resources in the serving cell is adjusted in the direction where the optimization target approaches. In the case that both the uplink and downlink spectrum efficiency and the uplink and downlink user perception satisfy the corresponding optimization targets, the multi-indicator gradient descent evaluation is performed after adjustment; otherwise, the ratio of the spectrum resources in the serving cell is adjusted again. Then, whether the multi-indicator gradient descent condition is satisfied is judged. If yes, the spectrum resource allocation process is finished. Through the non-cooperative game method, the non-convex optimization problem and the resource optimization problem of two dimensions of spectrum efficiency and user perception are subjected to iterative loop. By preferred orientation of the multi-indicator gradient descent method and the function thereof in the system, the spectrum efficiency of the system can be effectively improved, and the uplink and downlink optimal perception of the served users in the system is ensured.

In addition, corresponding to the spectrum resource allocation method in the CCTD system shown in FIG. 2 above, an embodiment of the present application further provides a network device. The network device 400 provided by the embodiment of the present application, as shown in FIG. 4, includes:

an extracting module 401, configured to extract, according to current spectrum resources allocated to each user in a serving cell, feature data of at least two network indicators related to spectrum resources;

an adjusting module 402, configured to determine optimization targets corresponding to the network indicators according to the feature data of each of the network indicators, and adjust, based on the optimization targets, the spectrum resources allocated to each user in the serving cell; and

a determining module 403, configured to obtain, in a case that after adjustment, the at least two network indicators satisfy the corresponding optimization targets and satisfy a multi-indicator gradient descent condition, target spectrum resources allocated to each user in the serving cell.

In an optional implementation, the network indicators include uplink and downlink spectrum efficiency; and correspondingly, the extracting module 401 may include:

a first extracting submodule, configured to determine spectrum efficiency or a spectrum efficiency mean square error of each uplink user in the serving cell as feature data of uplink spectrum efficiency, the uplink user being a user using uplink spectrum resources; and

a second extracting submodule, configured to determine spectrum efficiency or a spectrum efficiency mean square error of each downlink user in the serving cell as feature data of downlink spectrum efficiency, the downlink user being a user using downlink spectrum resources.

During specific implementation, the first extracting submodule is specifically configured to determine the spectrum efficiency of the uplink user based on uplink transmission power of the uplink user in the serving cell, an uplink composite channel matrix allocated to the uplink user by the serving cell, a beamforming factor of the uplink user in the serving cell, an uplink composite channel matrix allocated to the uplink user by neighboring cells, a beamforming factor of the uplink user in the neighboring cells, beamforming factors of other users in the neighboring cells, and transmission power of other users in the neighboring cells; and

the second extracting submodule is specifically configured to determine the spectrum efficiency of the downlink user based on a downlink composite channel matrix allocated to the downlink user by the serving cell, a beamforming factor of the downlink user in the serving cell, a downlink composite channel matrix allocated to the downlink user by neighboring cells, a beamforming factor of the downlink user in the neighboring cells, and transmission power of other users in the neighboring cells.

Correspondingly, the adjusting module 402 may include:

a first adjusting submodule, configured to determine a first optimization target corresponding to the uplink and downlink spectrum efficiency, which includes: a first optimization range corresponding to the uplink and downlink spectrum efficiency, where the first optimization range is determined based on a first function used for representing the uplink spectrum efficiency and a second function used for representing the downlink spectrum efficiency, the first function and the second function have an intersection in the same monotonic direction, the uplink spectrum efficiency is a sum of spectrum efficiency or spectrum efficiency mean square errors of all uplink users in the serving cell, and the downlink spectrum efficiency is a sum of spectrum efficiency or spectrum efficiency mean square errors of all downlink users in the serving cell.

In an optional implementation, the network indicators include uplink and downlink user perception; and correspondingly, the extracting module 401 may include:

a third extracting submodule, configured to determine an actual transmission rate of each uplink user in the serving cell as feature data of uplink user perception, the uplink user being a user using uplink spectrum resources; and

a fourth extracting submodule, configured to determine an actual transmission rate of each downlink user in the serving cell as feature data of downlink user perception, the downlink user being a user using downlink spectrum resources.

During specific implementation, the third extracting submodule is specifically configured to determine the actual transmission rate of the uplink user based on spectrum resources available to the uplink user and a signal to interference plus noise ratio (SINR) on a spectrum of the serving cell; and

the fourth extracting submodule is specifically configured to determine the actual transmission rate of the downlink user based on spectrum resources available to the downlink user and the SINR on the spectrum of the serving cell.

Correspondingly, the adjusting module 402 may include:

a second adjusting submodule, configured to determine a second optimization target corresponding to the uplink and downlink user perception to include: a second optimization range corresponding to the uplink and downlink user perception, where the second optimization range is determined based on a third function used for representing the uplink user perception and a fourth function used for representing the downlink user perception, the third function and the fourth function have an intersection in the same monotonic direction, the uplink user perception is a sum of actual transmission rates of all uplink users in the serving cell, and the downlink user perception is a sum of actual transmission rates of all downlink users in the serving cell.

In an optional implementation, the network device 400 may further include:
a control module, configured to return and trigger the execution of the extracting module 401 in the case that after adjustment, any one of the network indicators does not satisfy the corresponding optimization target.

In an optional implementation, the network device 400 may further include:
an initial allocating module, configured to allocate, before the extracting module 401 performs execution steps, initial spectrum resources to each user in the serving cell based on a SINR, a modulation and coding scheme (MCS), and service characteristics of each user in the serving cell within a scheduling period TTI.

Types of the service characteristics include: uplink and downlink services, unidirectional high-capacity services, low-latency services, and high-speed mobile services.

In an optional implementation, the control module is further configured to return and trigger the execution of the initial allocating module in the case that the at least two network indicators do not satisfy the multi-indicator gradient descent condition, where the multi-indicator gradient descent condition includes: the gradient descent of each model corresponding to the at least two network indicators monotonically converges or satisfies a Nash equilibrium point.

In an optional implementation, the extracting module 401 is specifically configured to, for each of the network indicators, perform multi-point sampling on feature data sampling values of the network indicators in a time domain and perform normalization processing to obtain the feature data of the network indicators.

Obviously, the network device provided by the embodiment of the present application can serve as an executing entity for the spectrum resource allocation method in the CCTD system as shown in FIG. 2. Therefore, the functions achieved by the spectrum resource allocation method in the CCTD system as shown in FIG. 2 can be achieved. Given that the principles are the same, further details are not repeated here.

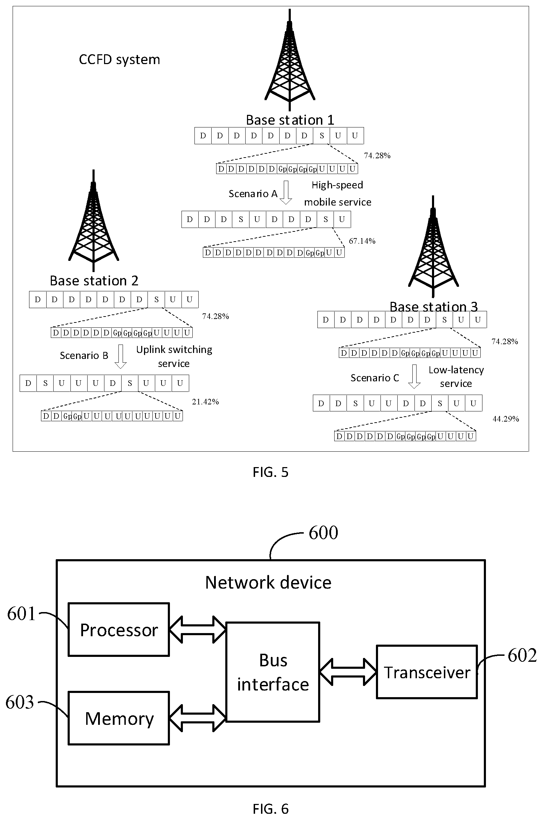

The technical effects achieved by the technical solutions according to the embodiments of the present application are exemplarily described. Please refer to FIG. 5, assuming that there are three base stations in the current CCFD system, namely Base Station 1, Base Station 2, and Base Station 3, with a total of three serving cells activated. The network currently hosts a plurality of served users distributed in a non-coherent manner. In the CCFD system, each serving cell corresponds to the introduction of Scenario A (high-speed mobile services), Scenario B (uplink switching services), and Scenario C (low-latency services). By adopting the technical solutions provided in the embodiments of the present application, aiming at the non-convex optimization problem corresponding to the two network indicators, a non-cooperative game method is used for loop iteration to approach the Nash equilibrium point. Therefore, the optimal effect in two dimensions of spectrum efficiency and user perception is obtained. Upon satisfying the multi-indicator gradient descent condition, the spectrum resource ratio of each serving cell is adjusted accordingly.

Optionally, as shown in FIG. 6, an embodiment of the present application further provides a network device 600, including: a processor 601, a transceiver 602, a memory 603, and a bus interface.

The memory 603 stores a program or instruction capable of running on the processor 601. The program or the instruction, when executed by the processor 601, , implements the various steps of the above embodiments of the spectrum resource allocation method in the CCTD system. The same technical effects are achieved. To avoid redundancy, further details are not repeated here.

In FIG. 6, a bus architecture may include interconnected buses of any number and bridges of any number, which are specifically linked together through various circuits of one or more processors represented by the processor 601 and various circuits of memories represented by the memory 603. The bus architecture may also link various other circuits such as peripheral devices, voltage regulators, and power management circuits, which are well known in the art, and therefore are not further described herein. The bus interface provides an interface. The transceiver 602 may include a plurality of components, specifically including a transmitter and a receiver, providing a unit for communicating with various other apparatuses over a transmission medium.

The processor 601 is responsible for managing the bus architecture and general processing, and the memory 603 may store data used when the processor 601 executes operations.

An embodiment of the present application further provides a readable storage medium. The readable storage medium stores a program or instruction. The program or instruction, when executed by a processor, implements the various processes of the above embodiments of the spectrum resource allocation method in the CCTD system. The same technical effects are achieved. To avoid redundancy, further details are not repeated here.

The processor is the processor in the network device of the above embodiment. The readable storage medium includes a computer-readable storage medium, such as a computer read-only memory (ROM), a random access memory (RAM), a magnetic disk, or an optical disk.

An embodiment of the present application further provides a chip. The chip includes a processor and a communication interface. The communication interface is coupled to the processor. The processor is configured to execute a program or instruction to implement the various processes of the above embodiments of the spectrum resource allocation method in the CCTD system. The same technical effects are achieved. To avoid redundancy, further details are not repeated here.

It should be understood that the chip mentioned in the embodiment of the present application may also be referred to as a system-on-chip, a system chip, a chip system, or a system-on-chip chip, or the like.

An embodiment of the present application provides a computer program product. The program product is stored in a storage medium. The program product is executed by at least one processor to implement the various processes of the as above embodiments of the spectrum resource allocation method in the CCTD system. The same technical effects are achieved. To avoid redundancy, further details are not repeated here.

It should be noted that, the terms "comprise", "include" or any other variants herein are intended to cover non-exclusive inclusion, so that a process, method, article or apparatus including a series of elements not only includes those elements, but also includes other elements not clearly listed, or also includes elements inherent to this process, method, article or apparatus. An element proceeded by the phrase "includes a" does not, without more constraints, preclude the existence of additional identical elements in the process, method, article, or apparatus that includes the element. Furthermore, it should be noted that the method and apparatus in the implementations of the present application are not limited to executing functions in the order illustrated or discussed, and may execute functions in a substantially simultaneous manner or in a reverse order, depending on the functions involved. For example, the described method may be executed in an order different from that described, and various steps may be added, omitted, or combined. In addition, features described with reference to certain examples may be combined in other examples.

As can be from the above description of the implementations, it is apparent to those skilled in the art that the method of the above embodiment can be implemented with the aid of software plus necessary common hardware platforms, of course, may also be implemented through hardware, but in many cases, the former is a better implementation. Based on this understanding, the technical solutions of the present application, in essence or as a contribution to the prior art, may be embodied in the form of a computer software product. The computer software product is stored in a storage medium (such as an ROM/RAM, a magnetic disk, or an optical disk), and includes a plurality of instructions to cause a terminal (which may be a mobile phone, a computer, a server, or a network device, or the like) to perform the method described in the various embodiments of the present application.

While the embodiments of the present application have been described above with reference to the accompanying drawings, it is to be understood that the present application is not limited to the above specific implementations, which are merely illustrative rather than restrictive, and that under the inspiration of the present application, those of ordinary skill in the prior art can make various forms without departing from the purpose of the present application and the scope of protection of the claims, and the forms all fall within the protection of the present application.

## Claims

1. A spectrum resource allocation method in a Co-time Co-frequency Full Duplex CCFD system, applied to a network device, comprising:

   extracting, according to current spectrum resources allocated to each user in a serving cell, feature data of at least two network indicators related to the spectrum resources;
   determining, according to the feature data of each of the network indicators, optimization targets corresponding to the network indicators, and adjusting, based on the optimization targets, the spectrum resources allocated to each user in the serving cell; and
   obtaining, in a case that after adjustment, the at least two network indicators satisfy the corresponding optimization targets and satisfy a multi-indicator gradient descent condition, target spectrum resources allocated to each user in the serving cell.

2. The method according to claim 1, wherein the network indicators comprise uplink and downlink spectrum efficiency; and
   extracting, according to current spectrum resources allocated to each user in a serving cell, feature data of at least two network indicators related to the spectrum resources, specifically comprises:
   in a case that the network indicators are the uplink and downlink spectrum efficiency, determining spectrum efficiency or a spectrum efficiency mean square error of each uplink user in the serving cell as feature data of uplink spectrum efficiency, and determining spectrum efficiency or a spectrum efficiency mean square error of each downlink user in the serving cell as feature data of downlink spectrum efficiency, the uplink user being a user using uplink spectrum resources, and the downlink user being a user using downlink spectrum resources.

3. The method according to claim 2, wherein the spectrum efficiency of the uplink user is determined based on uplink transmission power of the uplink user in the serving cell, an uplink composite channel matrix allocated to the uplink user by the serving cell, a beamforming factor of the uplink user in the serving cell, an uplink composite channel matrix allocated to the uplink user by neighboring cells, a beamforming factor of the uplink user in the neighboring cells, beamforming factors of other users in the neighboring cells, and transmission power of other users in the neighboring cells; and
the spectrum efficiency of the downlink user is determined based on a downlink composite channel matrix allocated to the downlink user by the serving cell, a beamforming factor of the downlink user in the serving cell, a downlink composite channel matrix allocated to the downlink user by neighboring cells, a beamforming factor of the downlink user in the neighboring cells, and transmission power of other users in the neighboring cells.

4. The method according to claim 2, wherein a first optimization target corresponding to the uplink and downlink spectrum efficiency comprises: a first optimization range corresponding to the uplink and downlink spectrum efficiency, the first optimization range is determined according to a first function used for representing the uplink spectrum efficiency and a second function used for representing the downlink spectrum efficiency, the first function and the second function have an intersection in the same monotonic direction, the uplink spectrum efficiency is a sum of spectrum efficiency or spectrum efficiency mean square errors of all uplink users in the serving cell, and the downlink spectrum efficiency is a sum of spectrum efficiency or spectrum efficiency mean square errors of all downlink users in the serving cell.

5. The method according to claim 1, wherein the network indicators comprise uplink and downlink user perception; and extracting, according to current spectrum resources allocated to each user in a serving cell, feature data of at least two network indicators related to the spectrum resources, specifically comprises:
in a case that the network indicators are the uplink and downlink user perception, determining an actual transmission rate of each uplink user in the serving cell as feature data of uplink user perception, and determining an actual transmission rate of each downlink user in the serving cell as feature data of downlink user perception, the uplink user being a user using uplink spectrum resources, and the downlink user being a user using downlink spectrum resources.

6. The method according to claim 5, wherein the actual transmission rate of the uplink user is determined based on spectrum resources available to the uplink user and a signal to interference plus noise ratio SINR on a spectrum of the serving cell; and the actual transmission rate of the downlink user is determined based on spectrum resources available to the downlink user and the SINR on the spectrum of the serving cell.

7. The method according to claim 5, wherein a second optimization target corresponding to the uplink and downlink user perception comprises: a second optimization range corresponding to the uplink and downlink user perception, the second optimization range is determined based on a third function used for representing the uplink user perception and a fourth function used for representing the downlink user perception, the third function and the fourth function have an intersection in the same monotonic direction, the uplink user perception is a sum of actual transmission rates of all uplink users in the serving cell, and the downlink user perception is a sum of actual transmission rates of all downlink users in the serving cell.

8. The method according to claim 1, further comprising:
in a case that after adjustment, any one of the network indicators does not satisfy the corresponding optimization target, returning to perform the step of extracting, according to the current spectrum resources allocated to each user in the serving cell, the feature data of the at least two network indicators related to the spectrum resources.

9. The method according to claim 1, wherein before extracting, according to current spectrum resources allocated to each user in a serving cell, feature data of at least two network indicators related to the spectrum resources, the method further comprises:
allocating initial spectrum resources to each user in the serving cell according to a signal to interference plus noise ratio SINR, a modulation and coding scheme MCS, and service characteristics of each user in the serving cell within a scheduling period TTI.

10. The method according to claim 9, wherein types of the service characteristics comprise:
uplink and downlink services, unidirectional high-capacity services, low-latency services, and high-speed mobile services.

**11.** The method according to claim 9, further comprising:
in a case that the at least two network indicators do not satisfy the multi-indicator gradient descent condition, returning to perform the step of allocating the initial spectrum resources to each user in the serving cell according to the signal to interference plus noise ratio SINR, the modulation and coding scheme MCS, and the service characteristics of each user in the serving cell within the scheduling period TTI, wherein the multi-indicator gradient descent condition comprises: the gradient descent of each model corresponding to the at least two network indicators monotonically converges or satisfies a Nash equilibrium point.

**12.** The method according to claim 1, wherein extracting feature data of at least two network indicators related to the spectrum resources, specifically comprises:
obtaining the feature data of the network indicators by performing, for each of the network indicators, multi-point sampling on feature data sampling values of the network indicators in a time domain and performing normalization processing.

**13.** A network device, comprising a processor, a memory, and a program or instruction that is stored on the memory and capable of running on the processor, wherein the program or the instruction, when executed by the processor, implements the method according to any one of the claims 1 to 12.

FIG. 1

S201

Extract, according to current spectrum resources allocated to each user in a serving cell, feature data of at least two network indicators related to the spectrum resources

S202

Determine, according to the feature data of each of the network indicators, optimization targets corresponding to the network indicators, and adjust, based on the optimization targets, the spectrum resources allocated to each user in the serving cell

S203

Obtain, in a case that after adjustment, the at least two network indicators satisfy the corresponding optimization targets and satisfy a multi-indicator gradient descent condition, target spectrum resources allocated to each user in the serving cell

FIG. 2

Start

Determine a ratio of uplink and downlink spectrum resources in an initial spectrum resource arrangement state — S301

In the initial spectrum resource arrangement state, measure key indicators of users in a serving cell within a scheduling period (TTI), and feed same back to the corresponding serving cell — S302

Allocate initial spectrum resources to each user within the scheduling cycle (TTI) based on a SINR, an MCS, and service characteristics of each user in the serving cell — S303

Extract, according to an allocation condition of the spectrum resources for each user in the serving cell, an eigenvalue matrix based on the uplink and downlink spectrum efficiency and the uplink and downlink user perception of each user — S304

Extract, for the eigenvalue matrix of the uplink and downlink spectrum efficiency and the uplink and downlink user perception, the corresponding optimization target by using non-convex optimization problem characteristics — S305

Adjust a ratio of the spectrum resources in the serving cell in a direction where the optimization target approaches — S306

Judge whether the uplink and downlink spectrum efficiency and the user perception in the serving cell after adjustment satisfy the corresponding optimization targets — S307

No

Yes

Extract a descent gradient of two network indicators after adjustment — S308

Whether to satisfy a multi-indicator gradient descent condition — S309

No

Yes

End this process

FIG. 3

Network device

Extracting module — 401

Adjusting module — 402

Determining module — 403

400

FIG. 4

FIG. 5

FIG. 6

## INTERNATIONAL SEARCH REPORT

International application No.

**PCT/CN2023/091701**

| A. | CLASSIFICATION OF SUBJECT MATTER |
| --- | --- |

H04W72/04(2023.01)i

According to International Patent Classification (IPC) or to both national classification and IPC

| B. | FIELDS SEARCHED |
| --- | --- |

Minimum documentation searched (classification system followed by classification symbols)

IPC: H04W

Documentation searched other than minimum documentation to the extent that such documents are included in the fields searched

Electronic data base consulted during the international search (name of data base and, where practicable, search terms used)

CNABS; CNTXT; VEN; USTXT; WOTXT; EPTXT; CNKI; 3GPP: 全双工, 同时同频, 频谱, 资源, 分配, 调度, 网络指标, 优化, 改进, 调整, 梯度下降, CCFD, frequency, resource, allocate, schedule, index, parameter, adjust, optimization

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 113038616 A (UNIVERSITY OF ELECTRONIC SCIENCE AND TECHNOLOGY OF CHINA) 25 June 2021 (2021-06-25) <br> description, paragraphs [0065]-[0133] | 1-13 |
| A | CN 114928385 A (XIDIAN UNIVERSITY) 19 August 2022 (2022-08-19) <br> entire document | 1-13 |
| A | CN 108880734 A (HARBIN ENGINEERING UNIVERSITY) 23 November 2018 (2018-11-23) <br> entire document | 1-13 |
| A | WO 2022094612 A1 (BATTELLE ENERGY ALLIANCE, LLC et al.) 05 May 2022 (2022-05-05) <br> entire document | 1-13 |

☐ Further documents are listed in the continuation of Box C.    ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **12 July 2023** | **06 August 2023** |

| Name and mailing address of the ISA/CN | Authorized officer |
| --- | --- |
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

| | International application No. |
|---|---|
| | **PCT/CN2023/091701** |

| Patent document cited in search report | | | Publication date (day/month/year) | Patent family member(s) | Publication date (day/month/year) |
|---|---|---|---|---|---|
| CN | 113038616 | A | 25 June 2021 | None | |
| CN | 114928385 | A | 19 August 2022 | None | |
| CN | 108880734 | A | 23 November 2018 | None | |
| WO | 2022094612 | A1 | 05 May 2022 | None | |

Form PCT/ISA/210 (patent family annex) (July 2022)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211175347